# FASCICULE DE BREVET EUROPEEN

(11) **EP 1 640 924 B1**
(45) Date de publication et mention de la délivrance du brevet: **15.10.2008**
(21) Numéro de dépôt: 05291940.4
(22) Date de dépôt: 20.09.2005
(51) Int. Cl.: G07B 17/00

(54) **Procédé de consolidation électronique d'articles de courrier**
Verfahren zur elektronischen Konsolidierung von Poststücken
Method for the electronic consolidation of mail pieces

(30) Priorité: 23.09.2004 FR 0410050
(43) Date de publication de la demande: 29.03.2006
(73) Titulaire: NEOPOST TECHNOLOGIES, 92220 Bagneux (FR)
(72) Inventeur: Gilham, Dennis, Stock Essex CM4 9LT (GB)
(74) Mandataire: Thévenet, Jean-Bruno

(56) Documents cités:
- EP-A- 0 911 754
- EP-A- 1 058 212
- EP-A- 1 431 929
- FR-A- 2 592 504
- US-A- 5 072 401

## Description

### Domaine de la technique

La présente invention se rapporte au domaine du traitement de courrier et elle concerne plus particulièrement un procédé pour envoyer automatiquement à un destinataire unique des articles de courrier provenant de nombreux expéditeurs.

### Art antérieur

Aujourd'hui, dans chaque pays l'affranchissement postal est réglementé et les valeurs d'affranchissement fixées par les administrations postales en fonction de barèmes de tarifs préétablis particulièrement détaillés. Toutefois, ces administrations postales accordent en général des remises sur ces tarifs lorsque l'expéditeur effectue des opérations habituellement du ressort de l'administration postale. C'est notamment le cas des routeurs qui traitent plusieurs milliers d'articles de courrier par jour et assurent un pré-tri, en apposant par exemple, un code à barres sur ces articles de courrier. On connaît aussi par le brevet US 5,072,401 un système logistique de transport ayant pour but d'élaborer un fichier de consolidation pour l'administration postale à partir de différents fichiers adressés par les différents expéditeurs de courrier. De même, il est connu avec la demande EP 0,911,754 un système de collecte ayant pour objet d'informer un serveur central sur les différentes étapes dans le transport d'un paquet.

### Définition et objet de l'invention

La présente invention a pour but de permettre aux expéditeurs individuels de bénéficier également d'une remise sur leurs tarifs habituels malgré l'absence à leur endroit des conditions nécessaires à l'application de cette remise. Un but de l'invention est donc de proposer un procédé qui soit indépendant du nombre d'articles de courriers adressés par l'expéditeur via l'administration postale et lui permette de bénéficier de conditions tarifaires avantageuses.

Ces buts sont atteints par un procédé de consolidation électronique d'articles de courrier entre une pluralité d'expéditeurs et une administration postale chargée de délivrer ces articles de courrier à leurs destinataires, caractérisé en ce qu'il comporte les opérations suivantes :
au niveau de chacun des expéditeurs,
   . apposer par un moyen d'impression sur chacun des articles de courrier à expédier un code d'identification unique (CI) qui identifie à la fois l'expéditeur et l'article de courrier,
   . créer dans une base de données depuis un ordinateur un fichier d'expédition des articles de courrier contenant, pour chaque article de courrier, ledit code d'identification unique et l'adresse du destinataire de cet article de courrier, et l'envoyer via un réseau à un serveur central distant d'un organisme tiers,
au niveau du serveur central de cet organisme tiers,
   . consolider dans une base de données centrale les fichiers reçus de tous les expéditeurs en un fichier unique de consolidation,
   . envoyer un ordre de ramassage à un service de collecte des articles de courrier pour qu'un agent de collecte procède au ramassage des articles de courrier à expédier auprès des différents expéditeurs, l'opération de ramassage comportant en outre une opération de saisie dudit code d'identification unique porté sur chaque article de courrier au niveau d'un moyen de saisie et une opération de transmission dudit code audit serveur central distant depuis ledit moyen de saisie, via un réseau de télécommunications sans fil, lesdits codes d'identification uniques saisis au moyen de saisie par ledit agent de collecte étant comparés, au niveau du serveur central, avec ceux présents dans ledit fichier de consolidation,
   . réceptionner les articles de courrier à tissu du ramassage et imprimer par un moyen d'impression sur chacun d'eux au moins un code à barres (CB) pour faciliter leur tri ultérieur par l'administration postale,
   .envoyer ledit fichier unique de consolidation résultant de la comparaison précédente à un serveur de l'administration postale et remettre les articles de courrier à un bureau de réception de l'administration postale.

Ainsi, l'administration postale reçoit les articles de courrier directement de l'organisme tiers et non plus des expéditeurs initiaux et le fichier de consolidation qui les accompagne permet selon son contenu de faire bénéficier cet organisme de remises conséquentes qui peuvent être redistribuées par l'organisme tiers aux expéditeurs initiaux.

L'opération de consolidation des fichiers reçus de tous les expéditeurs est engagée au plus tard à une heure limite prédéterminée.

Avantageusement, il est prévu, au niveau du serveur central, une opération de contrôle desdites adresses des destinataires à partir de ladite base de données centrale contenant une liste d'adresses valides.

Selon un mode de réalisation préférentiel, une opération de facturation des expéditeurs est effectuée en tenant compte des remises individuelles liées au traitement en volume du courrier ainsi adressé à l'administration postale.

Ledit code d'identification unique est une suite de caractères alphanumériques, de préférence de type OCR, ou un code à barres mono ou bidimensionnel. Toutefois, ledit code d'identification unique peut aussi être inscrit dans un indicateur RFID collé sur l'article de courrier.

### Brève description des dessins

D'autres caractéristiques et avantages de la présente invention ressortiront mieux de la description suivante, faite à titre indicatif et non limitatif, en regard des dessins annexés, sur lesquels:
- la figure 1 montre un exemple d'architecture d'un système logistique de transport et de suivi d'articles de courrier permettant la mise en oeuvre du procédé selon l'invention, et
- la figure 2 est un organigramme illustrant les différentes étapes du procédé de l'invention.

### Description détaillée d'un mode de réalisation préférentiel

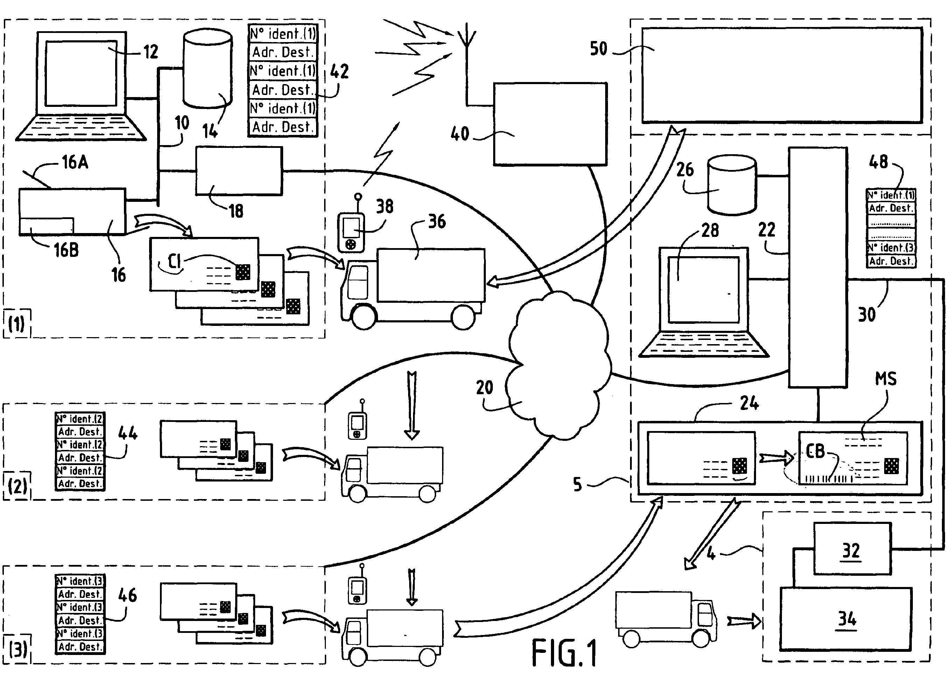

La figure 1 illustre de façon schématique une architecture d'un système logistique de transport et de suivi d'articles de courrier entre plusieurs expéditeurs individuels (par exemple 1, 2 et 3) et l'administration postale 4 qui reçoit ces articles de courrier pour les acheminer vers leur destinataire. Par articles de courrier, on entend tout objet sur lequel peut être apposée une marque postale, directement ou par le biais d'une étiquette collée sur cet article.

Selon l'invention, ce transport/suivi des articles de courrier est effectué par l'intermédiaire d'un organisme tiers 5 qui assure l'interface entre les différents expéditeurs et l'administration postale et se comporte, vis-à-vis de cette dernière, comme un routeur, c'est-à-dire un client grand compte capable de délivrer à l'administration postale plusieurs milliers d'articles de courriers par jour. Cet organisme tiers est le seul interlocuteur de l'administration postale qui n'a donc pas de relations directes avec les expéditeurs. Du fait de l'importante quantité de courrier traité, ce tiers pourra profiter de tarifs postaux préférentiels et donc de remises importantes par rapport aux tarifs standards applicables à un expéditeur individuel, remises dont il pourra lors partager le bénéfice avec chacun des expéditeurs qui se seront adressés à lui pour délivrer par son intermédiaire leur courrier à l'administration postale.

Comme illustré, un premier expéditeur 1, par exemple un entrepreneur individuel ou une petite entreprise, dispose d'un système informatique organisé autour d'un réseau local 10 auquel sont reliés entre autres, sans que cette énumération soit limitative, un ou plusieurs terminaux informatiques, de type ordinateur personnel 12 par exemple, une ou plusieurs bases de données 14, un module 16 de traitement de courrier pour la mise sous pli et l'affranchissement des articles de courrier à expédier et un modem/routeur 18 pour permettre un accès vers ou depuis le réseau Internet 20.

Le module 16 comporte classiquement un bac 16A pour la réception des enveloppes vides, un bac 16B pour le stockage des documents vierges devant être imprimés, un module de pliage pour insérer les documents dans les enveloppes et un module d'impression sécurisé pour imprimer à la fois les documents, les enveloppes et les marques postales devant être apposées sur ces enveloppes. De préférence, les documents sont édités sur un des ordinateurs 12 par l'expéditeur de l'article de courrier et transférés électroniquement au module 16 au travers du réseau local 10 pour être mis sous enveloppe avant l'affranchissement. Toutefois, la présence de ce module de traitement de courrier n'est pas indispensable à la mise en ouvre du procédé de l'invention, la mise sous enveloppe du document et l'affranchissement de l'enveloppe pouvant être effectuée manuellement (comme par exemple en cas d'expédition de paquets). De même, avant cette mise sous enveloppe, l'impression de l'enveloppe vide et du document (ou d'une étiquette en cas d'expédition de paquets) peuvent être réalisées par l'expéditeur au niveau d'une imprimante (non représentée) reliée directement à l'ordinateur 12.

Une configuration semblable qu'il n'est donc pas nécessaire de détailler, se retrouve chez les autres expéditeurs individuels 2 et 3 chacun également relié au réseau Internet 20.

Le système logistique comporte en outre au niveau de l'organisme tiers un serveur informatique central 22 qui gère un ensemble de tri 24 capable d'assurer un pré-tri d'articles de courrier selon différents critères particuliers déterminés par l'administration postale, notamment un critère géographique, et d'apposer sur ces articles de courrier, comme il est connu, différents codes permettant leur suivi et leur traitement par l'administration postale. Le serveur 22 est associé à une base de données 26 et à un ou plusieurs terminaux informatiques 28, et il est relié d'une part également au réseau Internet 20 et d'autre part, de préférence via une ligne spécialisée 30, à un serveur de l'administration postale 32 gérant notamment le système de tri des articles de courrier 34.

Pour assurer l'acheminement des articles de courrier depuis les différents expéditeurs vers l'organisme tiers puis vers l'administration postale, il est fait appel à un service de transport qui peut être indépendant ou non de cet organisme tiers. Dans le cadre de ce service chaque chauffeur (ou agent de collecte) d'un véhicule 36 de collecte des articles de courrier est avantageusement muni de moyens portatifs de saisie et de transmission automatique 38, de type ordinateur portable communiquant, assistant personnel communiquant ou téléphone mobile, qui peut être en liaison avec le serveur central 22 de l'organisme tiers via une station de base 40 d'un réseau de télécommunications sans fil reliée à ce serveur au travers du réseau Internet 20. Selon la nature du code d'identification unique, caractères alphanumériques ou code à barres, ces moyens portatifs peuvent comporter un moyen de lecture numérique, de type lecteur/reconnaisseur de codes à barres ou numériseur OCR, ou encore un moyen d'enregistrement numérique, de type photo numérique, pour lire ce code et le convertir, par des moyens logiciels associés, dans un format déterminé permettant son traitement au niveau du serveur central destiné à le recevoir.

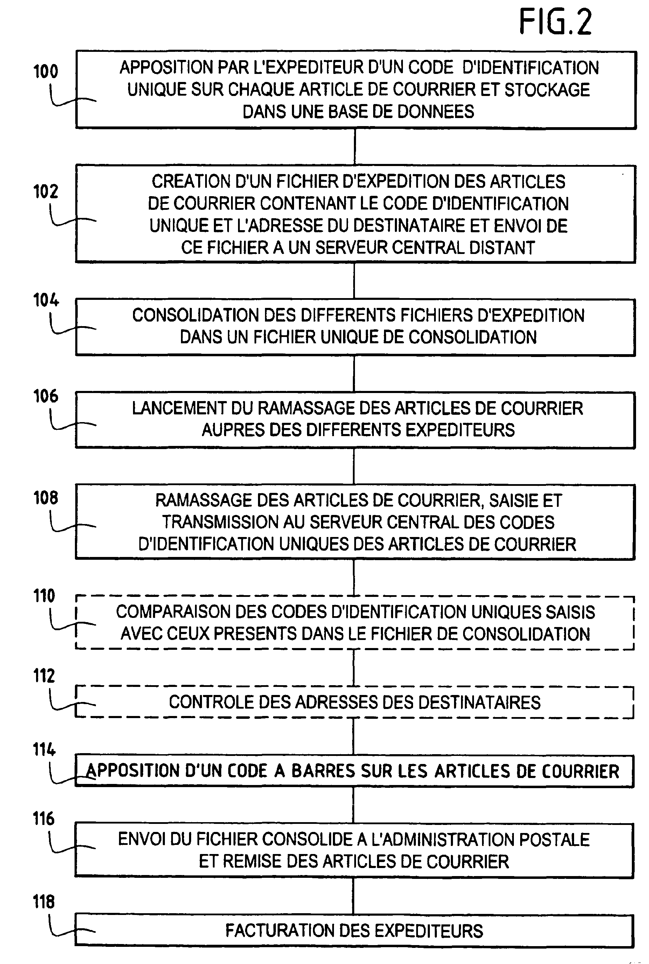

Le procédé mise en oeuvre dans le système logistique précité est maintenant explicité en regard de l'organigramme de la figure 2.

La première étape 100 de ce procédé est mise en oeuvre au niveau de chacun des expéditeurs et elle consiste à munir chacun des articles de courrier à expédier d'un code d'identification unique CI qui identifie à la fois l'expéditeur et l'article de courrier. Ce code d'identification unique peut se présenter sous la forme de caractères alphanumériques, de préférence de type OCR, ou, avantageusement, sous la forme d'un code à barres (mono ou de préférence bidimensionnel) imprimé dans ou au plus près de l'adresse du destinataire. Cette impression est réalisée de façon connue en soi par le module de traitement de courrier 16. En l'absence de ce module, l'impression peut bien entendu aussi être réalisée par une imprimante conventionnelle munie de moyens logiciels adéquats.

Le code d'identification unique peut aussi contenir d'autres informations facultatives et présentant un intérêt particulier pour l'expéditeur, comme la date d'expédition, le service postal utilisé, la référence du document inséré dans l'article de courrier, etc. Parallèlement à l'impression des codes d'identification uniques sur chacun des articles de courrier, l'ensemble des informations associé à ces codes est stocké dans la base de données 14 de l'expéditeur.

Dans une nouvelle étape 102, il est crée à partir de cette base de données un fichier 42, 44, 46 d'expédition des articles de courrier contenant, pour chaque article de courrier, le code d'identification unique et l'adresse du destinataire de cet article de courrier et ce fichier est envoyé au serveur central distant 22 de l'organisme tiers.

L'étape suivante 104 est mise en oeuvre chez l'organisme tiers et il consiste à combiner ou consolider électroniquement les différents fichiers reçus de tous les expéditeurs en un fichier unique de consolidation 48 pour préparer l'envoi à l'administration postale. Le moment de réception des fichiers peut différer d'un expéditeur à l'autre d'autant plus, de préférence, que l'expéditeur doit pouvoir compléter son envoi à tout moment. Toutefois, il est avantageusement fixée une date limite (ou plus précisément une heure limite) de réception des fichiers des expéditeurs à partir de laquelle la réalisation du fichier de consolidation est engagée.

Dans une étape 106, il est envoyé un ordre de ramassage à un service 50 de collecte des articles de courrier, service interne ou externe de l'organisme tiers, pour que un ou plusieurs agents de collecte procèdent, dans une étape 108, au ramassage des articles de courrier auprès des différents expéditeurs et les apportent à l'organisme tiers en vue de leur traitement avant leur acheminement vers leur destinataire via l'administration postale, ce ramassage s'accompagnant de préférence de la saisie du code d'identification unique CI porté sur chaque article de courrier et de sa transmission au serveur central 22 via le réseau de télécommunications sans fil.

Ainsi, dans une étape 110 facultative, il est alors possible de comparer au niveau du serveur central les codes d'identification des articles de courrier saisis directement par l'agent de collecte avec ceux reçus des différents expéditeurs et présents dans le fichier de consolidation 48 et ainsi informer si nécessaire l'expéditeur d'un éventuel oubli ou d'une erreur. On peut noter le traitement également facultatif de l'étape 112 qui consiste à contrôler les adresses des destinataires (notamment les codes postaux qui sont très utilisés pour le tri automatique) à partir de la base de données 26 qui contient une liste d'adresses valides.

Le ramassage terminé, le ou les agents de collecte vont apporter les articles de courrier à l'organisme tiers qui va les réceptionner pour le traitement et notamment l'impression, dans une nouvelle étape 114, d'un code à barres CB sur chacun de ces articles de courrier en vue de faciliter la reconnaissance ultérieure, notamment géographique, par l'administration postale des destinataires de ces articles de courrier. Différentes mentions de service MS peuvent aussi être apposées sur les articles de courrier permettant un suivi de l'article de courrier. Une fois ces traitements achevés, le fichier consolidé, qui aura éventuellement été complété des mentions précitées, est adressé, dans une étape 116, au serveur de l'administration postale et les articles de courrier remis parallèlement à un bureau de réception de l'administration postale. Dans une étape ultime 118, il peut alors être procédé à la facturation des expéditeurs en tenant compte des remises individuelles liées au traitement en volume du courrier ainsi adressé à l'administration postale.

Durant son propre processus de traitement et d'acheminement du courrier vers le destinataire, l'administration postale informera ou mettra à la disposition de l'organisme tiers, comme il est connu, les informations nécessaires au suivi des articles de courrier qui lui auront été remis et que cet organisme tiers pourra mettre à la disposition des expéditeurs par exemple sur le serveur central 22 accessible par Internet.

On notera également que si le procédé de la présente invention a été décrit en regard d'une architecture particulière, il ne saurait être limité à cette seule architecture, et on peut tout à fait envisager que le code d'identification unique soit enregistré dans un indicateur RFID (RFID tag) collé sur l'article de courrier à expédier, les moyens de saisie automatique à la disposition de l'agent de collecte étant alors avantageusement formés par un moyen de lecture RFID qui peut en extraire le code d'identification unique afin de permettre sa transmission au serveur central. De même, si l'affranchissement des articles de courrier a été effectué chez l'expéditeur il peut être préférable de l'effectuer plutôt chez l'organisme tiers.

Pareillement, si le procédé de l'invention a été décrit en référence à l'administration postale, on peut tout à fait envisager que celle-ci soit remplacée par un ou plusieurs transporteurs privés et que le serveur central choisisse le transporteur le mieux adapté (en pratique le moins cher ou celui présentant la meilleure qualité de service) en fonction des destinations des différents articles de courrier et qu'il adresse en conséquence non plus à l'administration postale mais à chaque transporteur sélectionné le fichier de consolidation qui sera alors mis au format souhaité par ce transporteur.

## Revendications

1. Procédé de consolidation électronique d'articles de courrier entre une pluralité d'expéditeurs et une administration postale chargée de délivrer ces articles de courrier à leurs destinataires, **caractérisé en ce qu'**il comporte les opérations suivantes :
au niveau de chacun des expéditeurs,
. apposer par un moyen d'impression (16) sur chacun des articles de courrier à expédier un code d'identification unique (CI) qui identifie à la fois l'expéditeur et l'article de courrier,
. créer dans une base de données (14) depuis un ordinateur (12) un fichier (42, 44, 46) d'expédition des articles de courrier contenant, pour chaque article de courrier, ledit code d'identification unique et l'adresse du destinataire de cet article de courrier, et l'envoyer via un réseau (20) à un serveur central distant (22) d'un organisme tiers,
au niveau du serveur central de cet organisme tiers,
. consolider dans une base de données centrale (26) les fichiers reçus de tous les expéditeurs en un fichier unique de consolidation (48),
. envoyer un ordre de ramassage à un service de collecte des articles de courrier (50) pour qu'un agent de collecte procède au ramassage des articles de courrier à expédier auprès des différents expéditeurs, l'opération de ramassage comportant en outre une opération de saisie dudit code d'identification unique porté sur chaque article de courrier au niveau d'un moyen de saisie (28) et une opération de transmission dudit code audit serveur central distant depuis ledit moyen de saisie, via un réseau de télécommunications sans fil, lesdits codes d'identification uniques saisis audit moyen de saisie par ledit agent de collecte étant comparés, au niveau dudit serveur central, avec ceux présents dans ledit fichier de consolidation,
. réceptionner les articles de courrier à l'issue du ramassage et imprimer par un moyen d'impression (24) sur chacun d'eux au moins un code à barres (CB) pour faciliter leur tri ultérieur par l'administration postale,
. envoyer ledit fichier unique de consolidation résultant de la comparaison précédente à un serveur de l'administration postale (32) et remettre les articles de courrier à un bureau de réception de l'administration postale.

2. Procédé selon la revendication 1, **caractérisé en ce que** l'opération de consolidation des fichiers reçus de tous les expéditeurs est engagée au plus tard à une heure limite prédéterminée.

3. Procédé selon la revendication 1, **caractérisé en ce qu'**il comporte en outre, au niveau du serveur central, une opération de contrôle desdites adresses des destinataires à partir de ladite base de données centrale (26) contenant une liste d'adresses valides.

4. Procédé selon la revendication 1, **caractérisé en ce qu'**il comporte en outre une opération de facturation des expéditeurs en tenant compte des remises individuelles liées au traitement en volume du courrier ainsi adressé à l'administration postale.

5. Procédé selon la revendication 1, **caractérisé en ce que** ledit code d'identification unique est une suite de caractères alphanumériques, de préférence de type OCR, ou un code à barres mono ou bidimensionnel.

6. Procédé selon la revendication 1, **caractérisé en ce que** ledit code d'identification unique est inscrit dans un indicateur RFID collé sur l'article de courrier.

7. Système logistique de transport et de suivi d'articles de courrier entre une pluralité d'expéditeurs et une administration postale chargée de délivrer ces articles de courrier à leurs destinataires, **caractérisé en ce qu'**il comporte organisé autour d'un réseau (20) ;
. une pluralité d'ordinateurs (12) associés chacun à un expéditeur déterminé et spécialement adaptés à créer dans une base de données (14) un fichier d'expédition des articles de courrier contenant, pour chaque article de courrier à expédier, d'une part un code d'identification unique (CI) qui identifie à la fois l'expéditeur et l'article de courrier et d'autre part l'adresse du destinataire,
. un serveur central (22) spécialement adapté à recevoir via ledit réseau depuis ladite pluralité d'ordinateurs lesdits fichiers d'expédition d'articles de courrier pour consolider les fichiers reçus en un fichier unique de consolidation, à envoyer à un service de collecte un ordre de ramassage des articles de courrier auprès de chacun des expéditeurs, à comparer lesdits codes d'identification uniques saisis par un agent de collecte au niveau d'un moyen de saisie (28) durant une opération de ramassage des articles de courrier auprès des différents expéditeurs et transmis audit serveur central via un réseau de télécommunication sans fil avec ceux présents dans ledit fichier de consolidation, à imprimer par un moyen d'impression (24) au moins un code à barres (CB) sur chacun des articles de courrier une fois ceux-ci réceptionnés, à envoyer ledit fichier unique de consolidation à un serveur de l'administration postale (32), et à envoyer un ordre de remise des articles de courrier à un bureau de réception de l'administration postale.

## Claims

1. A method of electronically consolidating mail items between a plurality of senders and a postal administration that handles delivery of said mail items to their destinations, **characterized in that** it comprises the following steps:
at the premises of each of the senders,
. using print means (16) to affix a unique identity code (CI) to each mail item for the purpose of identifying both the sender and the mail item,
. using a computer (12) to create a mail item consignment file (42, 44, 46) in a database (14), which file contains, for each mail item, said unique identity code and the address of the destination of said mail item, and sending said file via a network (20) to a remote central server (22) of a third party entity, at the central server of the third party entity,
. consolidating the files received from all of the senders into a single consolidation file (48) in a central database (26),
. sending a collection order to a mail item collection service (50) so that a collection employee collects the mail items to be sent from the various senders, the collection step also including an input step for inputting said unique identity code borne by each mail item at input means (28) and a transmission step for transmitting said code to said remote central server from said input means, via a wireless telecommunications network, said unique identity codes input at said input means by said collection employee being compared, at said central server with the unique identity codes that are present in said consolidation file,
. taking delivery of the mail items after the collection and using print means (24) for printing a bar code (CB) onto each of them for the purpose of facilitating subsequent sorting of them by the postal administration,
. sending said single consolidation file resulting from the previous comparison to a server of the postal administration (32) and handing over the mail items to a collection office of the postal administration.

2. A method according to claim 1, **characterized in that** the consolidation step for consolidating the files received from all of the senders is started at the latest at a predetermined limit time.

3. A method according to claim 1, **characterized in that**, at the central server, it further comprises a step of checking said destination addresses on the basis of said central database (26) which contains a list of valid addresses.

4. A method according to claim 1, **characterized in that** it comprises a step of invoicing the senders while taking account of the individual discounts linked to the bulk handling of the mail that is thus brought to the postal administration.

5. A method according to claim 1, **characterized in that** said unique identity code is a succession of alphanumeric characters, preferably of the OCR type, or a bar code that is one-dimensional or two dimensional.

6. A method according to claim 1, **characterized in that** said unique identity code is written in an RFID tag stuck to the mail item.

7. A logistics system for carrying and monitoring mail items between a plurality of senders and a postal administration that handles delivery of the mail items to their destinations, **characterized in that** it comprises the following organized around a network (20);
.a plurality of computers (12), each of which is associated with a determined sender and specially adapted for creating, in a database (14), a mail item consignment file that, for each mail item to be sent, contains firstly a unique identity code (CI) that identifies both the sender and the mail item, and secondly the destination address,
.a central server (22) specially adapted for receiving said mail item consignment files from said plurality of computers and via said network, for consolidating the received files into a single consolidation file, for sending a collection order to a collection service for having the mail items collected from each of the senders, for comparing said unique identity codes input at the input means (28) by said collection employee during a collection step of mail items from various senders and transmit to said central server via a wireless telecommunications network, with the unique identity codes that are present in said consolidation file, for using print means (24) to print at least one bar code (CB) on each of the mail items once delivery has been taken of said mail items, for sending said unique consolidation file to a server of the postal administration (32), and for sending a hand-over order for handing over the mail items to a collection office of the postal administration.

## Patentansprüche

1. Verfahren zur elektronischen Konsolidierung von Postsendungen zwischen einer Vielzahl von Absendern und einer mit der Auslieferung dieser Postsendungen an ihre Empfänger beauftragten Postverwaltung, **dadurch gekennzeichnet, daß** es die folgenden Schritte umfaßt:
im Bereich eines jeden Absenders,
- mit Hilfe eines Druckmittels (16) auf jede zu verwendende Postsendung einen einmaligen Identifikationscode (Cl) aufbringen, der sowohl den Absender als auch die Postsendung identifiziert,
- in einer Datenbank (14) von einem Computer (12) aus eine Postsendungsversand-Datei (42, 44, 46) erzeugen, die für jede Postsendung den einmaligen Identifikationscode und die Adresse des Empfängers dieser Postsendung enthält, und diese über ein Netz (20) an einen entfernten Zentralserver (22) einer Drittstelle senden,
im Bereich des Zentralservers dieser Drittstelle,
- in einer zentralen Datenbank (26) die von allen Absendern empfangenen Dateien zu einer einzigen Konsolidierungsdatei (48) konsolidieren,
- an einen Dienst zum Einsammeln der Postsendungen (50) einen Einsammelauftrag senden, damit ein Sammelmitarbeiter das Einsammeln der zu versendenden Postsendungen bei den verschiedenen Absendern vornimmt, wobei der Schritt des Einsammelns ferner einen Schritt zur Erfassung des auf jeder Postsendung aufgebrachten einmaligen Identifikationscodes im Bereich eines Erfassungsmittels (28) sowie einen Schritt zur Übertragung des Codes von dem Erfassungsmittel über ein drahtloses Telekommunikationsnetz an den entfernten Zentralserver umfaßt, wobei die an dem Erfassungsmittel durch den Sammelmitarbeiter erfaßten einmaligen identifikationscodes im Bereich des Zentralservers mit den in der Konsolidierungsdatei vorhandenen verglichen werden,
- die Postsendungen am Ende des Einsammelns in Empfang nehmen und mit Hilfe eines Druckmittels (24) auf eine jede von ihnen wenigstens einen Barcode (CB) aufdrucken, um ihre spätere Sortierung durch die Postverwaltung zu erleichtern,
- die aus dem vorherigen Vergleich hervorgehende einzige Konsolidierungsdatei an einen Server der Postverwaltung (32) senden und die Postsendungen einem Empfangsbüro der Postverwaltung zustellen.

2. Verfahren nach Anspruch 1, **dadurch gekennzeichnet**, das der Schritt zur Konsolidierung der von allen Absendern empfangenen Dateien spätesten zu einem vorbestimmen Annahmeschluß begonnen wird.

3. Verfahren nach Anspruch 1, **dadurch gekennzeichnet, daß** es ferner im Bereich des Zentralservers einen Schritt zur Kontrolle der Adressen der Empfänger mit Hilfe der eine Liste gültiger Adressen enthaltenden zentralen Datenbank (26) umfaßt.

4. Verfahren nach Anspruch 1, **dadurch gekennzeichnet, daß** es ferner einen Schritt zur Fakturierung an die Absender unter Berücksichtigung der mit der volumenmäßigen Bearbeitung der so an die Postverwaltung gesandten Post verbundenen Einzelrabatte umfaßt.

5. Verfahren nach Anspruch 1, **dadurch gekennzeichnet, daß** der einmalige Identifikaticationscode eine Folge von alphanumerischen Zeichen, vorzugsweise vom Typ OCR, oder ein ein- oder zweidimensionaler Barcode ist.

6. Verfahren nach Anspruch 1, **dadurch gekennzeichnet, daß** der einmalige Identifikationscode in eine auf die Postsendung aufgeklebt RFID-Markierung eingetragen ist.

7. Logistiksystem für den Transport und das Tracking von Postsendungen zwischen einer Vielzahl von Absendern und einer mit der Auslieferung dieser Postsendungen an ihre Empfänger beauftragten Postverwaltung, **dadurch gekennzeichnet, daß** es um ein Netz (20) herum organisiert folgendes umfaßt:
- eine Vielzahl von Computern (2), die jeweils einem bestimmen Absender zugeordnet und speziell geeignet sind, in einer Datenbank (14) eine Postsendungsversand-Datei zu erzeugen, die für jede zu versendende Postsendung einerseits einen einmaligen Identifikationscode (Cl), der sowohl den Absender als auch die Postsendung identifiziert, sowie andererseits die Adresse des Empfängers enthält,
- einen Zentralserver (22), der speziell geeignet ist, über das Netz, von der Vielzahl von Computern, die Postsendungsversand-Dateien zu empfangen, um die empfangenen Dateien zu einer einzigen Konsolidierungsdatei zu konsolidieren, einem Sammeldienst einen Auftrag zum Einsammeln der Postsendungen bei jedem der Absender zu senden, die durch einen Sammelmitarbeiter während eines Einsammelns der Postsendungen bei den verschiedenen Absendern im Bereich eines Erfassungsmittels (28) erfaßten und über ein drahtloses Telekommunikationsnetz an den Zentralserver übertragenen einmaligen Identifikationscodes mit den in der Konsolidierungsdatei vorhandenen zu vergleichen, mit Hilfe eines Druckmittels (24) wenigstens einen Barcode (CB) auf jede der Postsendungen zu drucken, sobald diese in Empfang genommen wurden, die einzige Konsolidierungsdatei an einen Server der Postverwaltung (32) zu senden und einen Auftrag zur Übergabe der Postsendungen an ein Empfangsbüro der Postverwaltung zu senden.
